# EUROPÄISCHE PATENTSCHRIFT

(11) **EP 1 743 502 B1**
(45) Veröffentlichungstag und Bekanntmachung des Hinweises auf die Patenterteilung: **05.12.2007**
(21) Anmeldenummer: 05737900.0
(22) Anmeldetag: 28.04.2005
(51) Int. Cl.: H04Q 7/38, H04L 12/56

(54) **AUFBAU VON MULTIHOP-KOMMUNIKATIONSVERBINDUNGEN IN ABHÄNGIGKEIT VON BEGRENZUNGSWERTEN**
MULTI-HOP COMMUNICATION SETUP SUBJECT TO BOUNDARY VALUES
ETABLISSEMENT DE COMMUNICATIONS EN FONCTION DE VALEURS DE LIMITATION

(30) Priorität: 30.04.2004 DE 102004021319
(43) Veröffentlichungstag der Anmeldung: 17.01.2007
(60) Teilanmeldung: 07015285.5
(73) Patentinhaber: SIEMENS AKTIENGESELLSCHAFT, 80333 München (DE)
(72) Erfinder: AUST, Stefan, 619-0224 Kyoto (JP); SESSINGHAUS, Michael, 33102 Paderborn (DE); PAMPU, Cornel, 13437 Berlin (DE); GÖRG, Carmelita, 28357 Bremen (DE)
(86) Internationale Anmeldenummer: PCT/EP2005/051930
(87) Internationale Veröffentlichungsnummer: WO 2005/107306

(56) Entgegenhaltungen:
- EP-A- 0 948 222
- EP-A- 1 133 113
- EP-A- 1 289 200
- WO-A-00/21245

## Beschreibung

Die vorliegende Erfindung betrifft ein Verfahren, eine Vorrichtung sowie ein Computerprogramm zum Aufbau von Kommunikationsverbindungen in einem Funk-Kommunikationssystems mit mindestens einer Basisstation und Teilnehmer-Endgeräten, die zumindest teilweise als multihop-fähige Ad-hoc-Knoten ausgebildet sind. Funk-Kommunikationssysteme mit multihop-fähigen Teilnehmer-Endgeräten sind aus dem Stand der Technik hinlänglich bekannt.

M. Lott et al. "Hierarchical Cellular Multihop Networks", EPMCC 2003, March 2003 schlägt eine Kombination eines zellularen Mobilkommunikationssystems auf Basis einer Infrastruktur aus fest installierten Basisstationen mit einem selbstorganisierenden WLAN-Ad-Hoc-Mobilkommunikationssystem vor. Die Basisstationen bieten einen Zugang zu einem Backbone-Netz, welches auf dem TCP/IP-Protokoll basiert. Das WLAN-Kommunikationssystem weist fest installierte Internet-Zugangspunkte (Access Points) auf. Die Reichweite bzw. räumliche Abdeckung (Coverage) zum Aufbau von Kommunikationsverbindungen zwischen einem Access Point und einem mobilen WLAN-Netzknoten (Mobile Node) kann durch fest installierte oder mobile multihop-fähige Netzknoten (Multihop capable Nodes) erweitert werden. Es wird darin ausgeführt, dass eine Multihop-Kommunikationsverbindung im Vergleich zu einer direkten Kommunikationsverbindung mehr Netzkapazität benötigt, da für jede Teilverbindung zum Aufbau der gesamten Multihop-Verbindung entsprechende Übertragungsressourcen benötigt werden.

In G. Cristache et al. "Aspects for the integration of ad-hoc and cellular networks", 3rd Scandinavian Workshop on Wireless Ad-hoc Networks, Stockholm, May 6-7^{th} 2003 wird insbesondere vorgeschlagen, eine Ad-hoc-Netzwerkfunktion unmittelbar zur Erweiterung der Abdeckung und zur Erhöhung der Zellkapazität eines zellularen Mobil-Kommunikationssystems wie UMTS zu verwenden, ohne dabei Access Points vorzusehen. Es werden dabei mobile Endgeräte des UMTS-Netzes so ausgebildet, dass eine Kommunikationsverbindung von der Basisstation über ein mobiles Endgerät zu einem weiteren mobilen Endgerät aufgebaut wird.

Durch die Erweiterung der Abdeckung (Coverage Extension) wird also der Netzradius bzw. der Zellradius erhöht, so dass auch weiter von einem Kommunikationsetz bzw. einer Basisstation entfernte Endgeräte von diesem Netz bzw. der jeweiligen Basisstation versorgt werden können. Hierdurch wird jedoch die Bandbreite des gesamten Netzes negativ beeinflusst.

Aus EP 1 133 113 A2 ist ein Verfahren zu flächigen Verteilung von Nachrichten bekannt. Zur Verhinderung, dass Nachrichten bei Weitergabe bereits veraltet sind oder das adressierte Gebiet verlassen, enthalten die Nachrichten Informationen zu einer so genannten Lebenszeit oder einem Hop-Limit. Hierdurch kann ein eine derartige Nachricht empfangendes Endgerät erkennen, ob es diese an weitere Endgeräte weitergeben soll oder nicht. Ein entsprechendes Ergebnis kann alternativ durch Vorgabe einer räumlichen Begrenzung in den Nachrichten erzielt werden, indem ein empfangendes Endgerät prüft, ob seine aktuelle Position noch innerhalb des vorgesehenen Verbreitungsgebietes der Nachricht liegt.

Aufgabe der vorliegenden Erfindung ist es, eine verbesserte Möglichkeit zum Aufbau von Kommunikationsverbindungen zwischen einer Basisstation und Teilnehmer-Endgeräten, die zumindest teilweise als multihop-fähige Ad-hoc-Knoten ausgebildet sind, bereitzustellen. Diese Aufgabe wird gelöst durch die Merkmale der unabhängigen Patentansprüche. Vorteilhafte Weiterbildungen der Erfindung sind abhängigen Patentansprüchen entnehmbar.

Ein erster Gegenstand der Erfindung betrifft ein Verfahren zum Aufbau von Kommunikationsverbindungen in einem Funk-Kommunikationssystems mit mindestens einer Basisstation und Teilnehmer-Endgeräten, die zumindest teilweise als multihop-fähige Ad-hoc-Knoten ausgebildet sind. Gemäß der Erfindung ist vorgesehen, dass zumindest für einen Teil der Kommunikationsverbindungen seitens des Funk-Kommunikationssystems Begrenzungswerte für Multihop-Kommunikationsverbindungen festgelegt werden, aktuelle Werte für die Multihop-Kommunikationsverbindungen ermittelt werden und Multihop-Kommunikationsverbindungen zu Teilnehmer-Endgeräten nur dann aufgebaut werden, soweit durch die aktuellen Werte die festgelegten Begrenzungswerte nicht überschritten werden. Kennzeichnend erfolgt zwischen Basisstationen ein Austausch von Informationen über die Begrenzungswerte, welche für die jeweiligen Basisstationen festgelegt wurden.

Dadurch kann auf einfache Weise garantiert werden, dass gewünschte Vorgaben insbesondere an die erforderliche Bandbreite innerhalb des Funk-Kommunikationssystems eingehalten werden. Die Begrenzungswerte können einmalig oder in regelmäßigen zeitlichen Abständen festgelegt werden. Sie können aber auch ereignisgesteuert dynamisch festgelegt und optimiert werden, beispielsweise bei einer Änderung der aktuellen Zahl der aktiven Teilnehmer-Endgeräte in dem jeweiligen Funk-Kommunikationssystem.

Durch den erfindungsgemäßen Austausch von Informationen über die Begrenzungswerte erfolgt zudem eine Optimierung der Begrenzungswerte der Basisstationen in gegenseitiger Abstimmung der Basisstationen untereinander, um auch basisstationsübergreifend eine möglichst optimale Netzfunktion zu erreichen. Dies bietet also die Möglichkeit einer Anpassung der Begrenzungswerte einer Basisstation auf Basis der festgelegten Begrenzungswerte benachbarter Basisstationen.

Bevorzugt kann vorgesehen werden, dass für jede Basisstation individuelle Begrenzungswerte festlegbar sind. Damit kann für jede Basisstation eine individuelle Optimierung der jeweiligen Begrenzungswerte in Abhängigkeit von den lokalen Verhältnissen im Bereich der jeweiligen Basisstation erfolgen.

Die Begrenzungswerte können grundsätzlich auf jede geeignete Art und von jeder geeigneten Instanz des Funk-Kommunikationssystems festgelegt werden. Bevorzugt erfolgt jedoch eine Auswertung von Zellparametern durch eine Basisstation des Funk-Kommunikationssystems und auf Basis des Ergebnisses dieser Auswertung eine Festlegung der Begrenzungswerte für die Kommunikationsverbindungen dieser Basisstation. Damit kann die Festlegung der Begrenzungswerte autonom und individuell durch jede Basisstation erfolgen.

Insbesondere kann vorgesehen werden, dass der Austausch von Informationen zumindest teilweise auf einem Protokoll nach IPv6 basiert. Protokolle nach IPv6 (IP-Protokoll Version 6) bieten den Vorteil, dass bereits Funktionalitäten für Kommunikationsverbindungen von und/oder zu mobilen Teilnehmer-Endgeräten im Rahmen dieser Protokolle vorgesehen sind. Bevorzugt wird dabei vorgesehen, dass der Austausch von Informationen zumindest teilweise auf einem Protokoll nach HMIPv6 (Hierarchical Mobility IPv6) basiert. Dieses Protokoll stellt eine Weiterbildung von IPv6 dar, die eine skalierbare IP-Netzinfrastruktur bestehend aus einzelnen Mobility Anchor Points (MAP) erlaubt. Dadurch ergeben sich besondere Vorteile, die sich gerade auch auf der Funk-Kommunikationsseite der Kommunikationsverbindungen zu Teilnehmer-Endgeräten auswirken: Es kann mit Hilfe der MAP eine IP-Infrastruktur mit praktisch beliebigen Hierarchiestufen gebildet werden, d.h. die IP-Infrastruktur ist je nach Bedarf an Netzabdeckung und Zugangsknoten zur IP-Infrastruktur praktisch beliebig skalierbar. Auf diese Weise können funknetzseitig insbesondere notwendige Handover schneller realisiert werden, da ein Handover signalisierungstechnisch nur über die lokal betroffenen MAPs abgewickelt werden muss und nicht beispielsweise über eine einzige gemeinsame Zentraleinrichtung, die den Ablauf des Handovers verlangsamen würde.

Die Begrenzungswerte können grundsätzlich auf Basis von jeglichen geeigneten Vorgaben und/oder Messdaten festgelegt werden. Bevorzugt wird jedoch vorgesehen, dass die Begrenzungswerte auf Basis von Ad-hoc-Protokolldaten festgelegt werden. Es werden damit zur Festlegung der Begrenzungswerte ohnehin im Rahmen des Aufbaus bzw. der Signalisierung von Ad-hoc Kommunikationsverbindungen vorhanden Daten verwendet. Damit ist eine Realisierung der Erfindung mit minimalem Zusatzaufwand seitens des Funk-Kommunikationssystems möglich.

Ein weiterer Gegenstand der vorliegenden Erfindung umfasst eine Vorrichtung zum Aufbau von Kommunikationsverbindungen in einem Funk-Kommunikationssystems mit mindestens einer Basisstation und Teilnehmer-Endgeräten, die zumindest teilweise als multihop-fähige Ad-hoc-Knoten ausgebildet sind. Gemäß der Erfindung weist diese Einrichtung folgendes auf:
eine Einrichtung zur Festlegung von Begrenzungswerten für Multihop-Kommunikationsverbindungen zumindest für einen Teil der Kommunikationsverbindungen,
eine Einrichtung zum Vergleich der festgelegten Begrenzungswerte mit aktuellen Werten für die Multihop-Kommunikationsverbindungen, sowie
eine Einrichtung zum Aufbau von weiteren Multihop-Kommunikationsverbindungen in Abhängigkeit vom Vergleichsergebnis.
Die Vorteile, die sich durch diese technischen Maßnahmen ergeben, wurden bereits in analoger Weise anhand des bereits oben dargestellten Verfahrens erläutert.

Eine Weiterbildung dieses Gegenstandes der Erfindung weist eine Einrichtung zum Austausch von Informationen über die Begrenzungswerte zwischen Basisstationen des Funk-Kommunikationssystems auf. Auch hier wird zur Bedeutung und den Vorteilen dieser Maßnahme auf auf die entsprechenden Ausführungen zum bereits oben dargestellten Verfahren verwiesen.

Insbesondere kann vorgesehen sein, dass die Einrichtung zum Austausch von Informationen zumindest teilweise zur Verarbeitung eines Protokolls nach IPv6 ausgelegt ist. Dabei kann bevorzugt vorgesehen werden, dass die Einrichtung zum Austausch von Informationen zumindest teilweise zur Verarbeitung eines Protokolls nach HMIPv6 ausgelegt ist. Die Vorteile, die sich daraus gerade für ein Funk-Kommunikationssystem mit mobilen, multihop-fähigen Teilnehmer-Endgeräten ergeben, wurde bereits oben anhand des erfindungsgemäßen Verfahrens erläutert.

Ein dritter Gegenstand der vorliegenden Erfindung ist ein Computerprogramm, welches bevorzugt zur Durchführung eines oben beschriebenen Verfahrens ausgebildet ist. Insondere kann das Computerprogramm zum Zusammenwirken mit einer oben beschriebenen, erfindungsgemäße Vorrichtung ausgebildet sein.

Gemäß der Erfindung ist vorgesehen, dass das Computerprogramm folgendes aufweist:
eine erste Programmroutine, die zumindest für einen Teil der Kommunikationsverbindungen in einem Funk-Kommunikationssystems Begrenzungswerte für Multihop-Kommunikationsverbindungen berechnet und festlegt,
eine zweite Programmroutine zur Ermittlung von aktuellen Werte für die Multihop-Kommunikationsverbindungen und
eine dritte Programmroutine, die eine Vorrichtung zum Aufbau von Multihop-Kommunikationsverbindungen zu Teilnehmer-Endgeräten nur dann ansteuert, soweit durch die aktuellen Werte die festgelegten Begrenzungswerte nicht überschritten werden.

Auch die übrigen oben genannten Verfahrensschritte sowie weitere Verfahrensschritte, Datenbearbeitungs- und übertragungsschritte und insbesondere Protokolle, die im Rahmen der folgenden Figurenbeschreibung erläutert werden, können grundsätzlich in Form von Programmroutinen dieses oder eines anderen geeigneten Computerprogramms realisiert werden.

Nachfolgend wird ein spezielles Ausführungsbeispiel der vorliegenden Erfindung anhand der Figuren 1 bis 11 erläutert.

Es zeigen:
- Fig. 1:: Schematische Darstellung einer hierarchischen Kommunikationsinfrastruktur
- Fig. 2:: Schematische Darstellung einer Ad-hoc Coverage Extension ohne definierten Hop-Radius
- Fig. 3:: Schematische Darstellung einer Ad-hoc Coverage Extension mit definierten Hop-Radien
- Fig. 4:: Schematische Darstellung einer Ad-hoc Coverage Extension mit optimierten Hop-Radius
- Fig. 5:: Sequenzverlauf bei positiven Vergleichsergebnis des Hop-Radius ohne Kommunikation zwischen den Basistationen
- Fig. 6:: Sequenzverlauf bei negativen Vergleichsergebnis des Hop-Radius ohne Kommunikation zwischen den Basistationen
- Fig. 7:: Sequenzverlauf bei positiven Vergleichsergebnis des Hop-Radius mit Kommunikation zwischen den Basistationen
- Fig. 8:: Sequenzverlauf bei negativen Vergleichsergebnis des Hop-Radius mit Kommunikation zwischen den Basistationen
- Fig. 9:: Protokollstack bei Anbindung von Mobile IP und Adhoc (AODV)
- Fig. 10:: Schematische Darstellung der wesentlichen erfindungsgemäßen Komponenten einer Basisstation
- Fig. 11:: Schematische Darstellung einer hierarchischen Kommunikationsinfrastruktur analog Fig. 1, jedoch nach HMIPv6

Das nachfolgend dargestellte Ausführungsbeispiel betrifft eine Möglichkeit zur Festlegung von Begrenzungswerten für Multihop-Kommunikationsverbindungen, wobei eine Festlegung eines Hop-Radius (maximal zulässige Anzahl der Hops pro Kommunikationsverbindung) und/oder eine Festlegung der Gesamtzahl der mit einer Basisstation aktuell verbunden Ad-Hoc Teilnehmer-Endgeräte in dem Ad-hoc Netz erfolgt. Die Teilnehmer-Endgeräte des drahtlosen Kommunikationsnetzes sind in der Lage, aufgrund der Multihop-fähigkeit zumindest eines Teils der Teilnehmer-Endgeräte über ein Ad-hoc Netz eine Verbindung zur Basisstation aufzubauen, obwohl diese Teilnehmer-Endgeräte außerhalb der Reichweite der Basisstation sind. Das Ad-hoc Netz erweitert folglich die Reichweite der Basisstation mittels eines Multihop Ad-hoc Routing Protokolls. Diese Reichweitenerweiterung wird auch Coverage Extension genannt. Diese Coverage Extension basiert auf der Verwendung von Teilnehmer-Endgeräten in Form von Ad-hoc Knoten, die als Router IP-Verbindungen zur Verfügung stellen, die für den Kommunikationsweg der jeweiligen Kommunikationsverbindung verwendet werden können. Das drahtlose Kommunikationsnetz kann beispielsweise als geeignetes UMTS-Mobilfunknetz oder auch als WLAN-Netz ausgebildet sein, welches eine entsprechende Ad-hoc Coverage Extension erlaubt, wie grundsätzlich aus dem eingangs zitierten Stand der Technik bekannt.

Im folgenden werden kurz die wesentlichen Komponenten und Funktionen des Gegenstandes der Erfindung gemäß dem vorliegenden Ausführungsbeispiel erläutert:

### Basisstation:

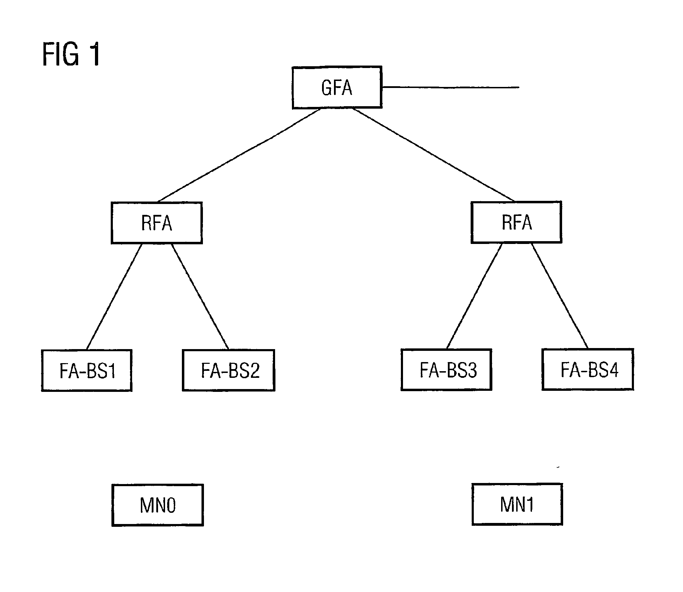

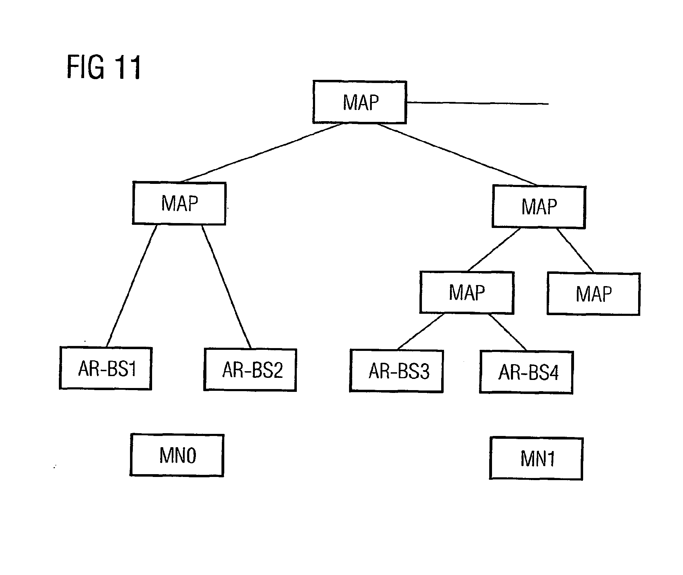

Die Basisstation ist das Gateway zwischen den Ad-hoc Teilnehmer-Endgeräten und einer IP-Infrastuktur (z.B. Internet, siehe Fig. 1 und 11). Es bietet den Ad-hoc Teilnehmer-Endgeräten den Zugang zum Internet und ermöglicht somit die Anbindung von Ad-hoc Teilnehmer-Endgeräten an weit entfernte Kommunikationspartner, die ebenfalls an eine IP-basierte Kommunikationsinfrastruktur angebunden sind. Die Basisstation ist entsprechend für die Anbindung von Ad-hoc Teilnehmer-Endgeräten an das Internet ausgebildet und ist daher sowohl zur Verarbeitung eines Ad-hoc Protokolls wie auch eines IP-basierten Mobilitiätsprotokolls ausgebildet.

### Hop-Radius:

Der Hop-Radius entspricht der maximalen zulässigen Hop-Länge von der Basisstation zu den Ad hoc Teilnehmern in dem Ad hoc Netz. Der Hop-Radius ist also die maximal zulässige Zahl der Hops (Zwischenknoten) zwischen der Basisstation und einem Ad-hoc Teilnehmer-Endgerät. Die Anzahl der Hops wird mit Hilfe des Ad-hoc Protokolls an die Basisstation übermittelt, bzw. kann von der Basisstation aus der Routinginformation ermittelt werden. Besteht eine solche Verbindung beispielsweise aus drei Hops, so sind die Basisstation, ein Ad-hoc Teilnehmer-Endgerät und zwei weitere Ad-hoc Knoten in dieser Verbindung enthalten. Wird die maximal zulässige Hop-Zahl erhöht bzw. wird der Hop-Radius vergrößert, so erhöht sich die Netzlast, da damit auch mehr Ad-hoc Teilnehmer im Ad-hoc Netz um die Basisstation enthalten sein können. Es kann ein Hop-Radius durch die Basisstation selbst festgelegt werden. Auf Basis dieser Festlegung werden Ad-hoc Teilnehmer-Endgeräte deren Hop-Länge den Hop-Radius übersteigen würde, nicht in das Ad-hoc Netz um die entsprechende Basisstation aufgenommen. Das Netz sowie die Netzlast bleiben dadurch stabil.

### Ad-hoc Teilnehmerzahl:

Alternativ oder zusätzlich zu dem vorgenannten Verfahren kann bei der Berechung der Netzlast und der Festlegung des Hop-Radius die absolute Anzahl Ad-hoc Teilnehmer-Endgeräten innerhalb eines Ad-hoc Netzes berücksichtigt werden. Alternativ zu der Festlegung eines Hop-Radius als Begrenzungswert kann auch eine Festlegung einer maximalen Anzahl von Ad-hoc Teilnehmer-Endgeräten als Begrenzungswert innerhalb eines Ad-hoc Netzes erfolgen. Dabei kann z.B. festgelegt werden, dass der Hop-Radius für eine bestimmte Basisstation so lange nicht reduziert wird, wie eine bestimmte Anzahl an Ad-hoc Teilnehmer-Endgeräten nicht überschritten ist.

Es kann auch eine Kombination (Trade-off) zwischen Hop-Radius und maximal zulässiger Ad-hoc Teilnehmerzahl realisiert werden (hybrides Verfahren):
Die oben genannten Verfahren zur Festlegung des Hop-Radius und der maximal zulässigen Anzahl der Ad-hoc Teilnehmer-Endgeräte können für eine optimierte Berechung der Netzlast kombiniert werden. Hierbei ist ein Trade-off möglich, der als Kombination zwischen einem Hop-Radius-Algorithmus und Ad-hoc Teilnehmerzahl-Algorithmus eine verbesserte Netzplanung ermöglicht. Es werden hierbei bevorzugt entsprechende Bewertungsparameter auf Basis der genannten Algorithmen berechnet. Diese Berechnung kann von der Basisstation autonom durchgeführt werden und zur Festlegung sowohl des Hop-Radius als auch der maximal zulässigen Ad-hoc Teilnehmeranzahl verwendet werden. Es kann zudem für dieses Verfahren bevorzugt ein virtueller Coverage Radius als weiterer Begrenzungswert definiert werden. Dieser virtuelle Coverage Radius stellt einen Wert dar, der als Funktion der festgelegten und/oder ermittelten Werte für den Hop-Radius und die maximal zulässige Ad-hoc Teilnehmeranzahl bestimmt wird. Je größer der Hop-Radius und die Ad-hoc Teilnehmeranzahl, desto größer ist auch der Coverage Radius. Im einfachsten Fall wird also der Coverage Radius direkt proportional zum Hop-Radius und zur Ad-hoc Teilnehmeranzahl definiert.

### Kommunikation zwischen den Basisstationen:

Es wird ein spezifisches Kommunikations-Protokoll zum Datenaustausch zwischen verschiedenen Basisstationen FA-BS1 bis FA-BS4 (siehe Fig. 1) angewendet. Dieses Kommunikations-Protokoll sieht den Austausch von Informationen über Begrenzungswerte, wie z.B. den Hop-Radius oder die maximal zulässige Ad-hoc Teilnehmeranzahl zwischen (bevorzugt benachbarten) Basisstationen FA-BS1 bis FA-BS4 vor. Der Austausch kann beispielsweise über eine in Fig. 1 schematisch dargestellte IP-Infrastruktur erfolgen, an die die Basisstationen FA-BS1 bis FA-BS4 angeschlossen sind. Vorgesehen werden kann dafür eine hierarchische Mobile IP-Infrastruktur, die es ermöglicht, dass übergeordnete Instanzen (Mobilitätsagenten) den Austausch der Informationen zwischen den Basisstationen FA-BS1 bis FA-BS4 koordinieren. Diese sind im Beispiel nach Fig. 1 als Regional Foreign Agent RFA und/oder Gateway Foreign Agent GFA ausgebildet. Fig. 11 zeigt ein alternatives Ausführungsbeispiel basierend auf IPv6. Es wird dabei IP-Struktur nach HMIPv6 dargestellt, wobei statt den streng definierten RFA und GFA lediglich funktional prinzipiell gleichwertige Mobility Anchor Point (MAP) vorgesehen sind. Die Basisstationen BS1 bis BS4 dienen als Access Router AR. Dadurch ist die IP-Infrastruktur praktisch beliebig skalierbar. Dies wird später noch detailliert erläutert.

Die Mobilitätsagenten RFA, GFA nach Fig. 1 sind datentechnisch mit den Basisstationen FA-BS1 bis FA-BS4 verbunden. Somit ist ein Austausch zwischen den verschiedenen Basisstationen FA-BS1 bis FA-BS4 auf einfache Weise möglich. Das genannte Protokoll gestattet diesen Datenaustausch als Teil der autonomen Anpassung und Optimierung der Netzplanung, basierend auf dem Hop-Radius und/oder der maximal zulässigen Ad-hoc Teilnehmerzahl.

Durch die vorliegende Erfindung werden Begrenzungswerte für ein Ad-hoc Netz um eine Basisstation festgelegt. Damit wird letztlich auch die Ausdehnung der Coverage Extension um die entsprechende Basisstation festgelegt. Geringere Hop-Radien bzw. geringere Ad-hoc Teilnehmerzahlen führen in der Regel notwendigerweise auch zu einer geringeren Ausdehnung der Coverage Extension, die durch das Ad-hoc Netz um eine entsprechende Basisstation erzielt wird. Dieser Tatsache kann im Rahmen der Definition des o.g. virtuellen Coverage Radius Rechnung getragen werden.

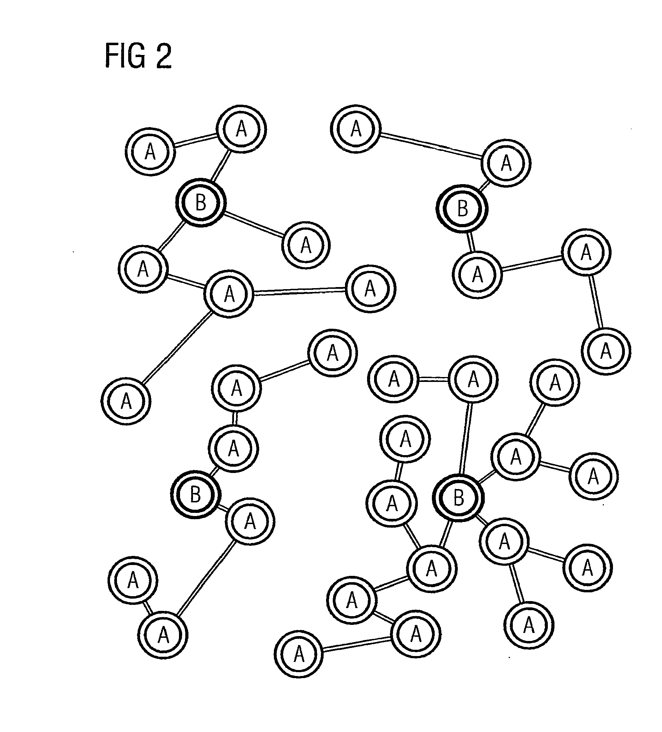

Die Festlegung der Begrenzungswerte ist erforderlich, damit nicht durch weitentfernte Ad-hoc-Teilnehmer-Endgeräte MN0, MN1 lange IP-Routen über eine Vielzahl von Hops aufgebaut werden, die wiederum die Bandbreite des gesamten Ad-hoc Netzes um eine Basisstation FA-BS1 bis FA-BS4 reduzieren würden. Dies wird im folgenden anhand der Fig. 2 bis 4 noch deutlicher veranschaulicht. Eine Basisstation FA-BS1 bis FA-BS4 kann also durch Festlegen von Begrenzungswerten letztlich beeinflussen, ob ein weit entferntes Teilnehmer-Endgerät MN0, MN1 in das eigene Ad-hoc Netz aufzunehmen ist. Hierzu ist ein Algorithmus erforderlich, der aus der bereits bestehenden Anzahl der Ad-hoc Teilnehmer und den Hop-Längen ein Kriterium definiert, damit die Bandbreite eingehalten werden kann.

Jede Basisstation FA-BS1 bis FA-BS4 kann ferner auf Basis der festgelegten Begrenzungswerte und des Informationsaustausches mit anderen Basisstationen FA-BS1 bis FA-BS4 und/oder mit einem bestimmten Ad-hoc Teilnehmer-Endgerät MN0 entscheiden, ob dieses Ad-hoc Teilnehmer-Endgerät MN0 in das eigene Ad-hoc Netz aufzunehmen ist, insbesondere dann, wenn dieses Ad-hoc Teilnehmer-Endgerät MN0 keine andere Verbindungsmöglichkeit zu anderen Basisstationen FA-BS1 bis FA-BS4 für sich ermitteln kann. In diesem Fall kann das Teilnehmer-Endgerät MN0 eine entsprechende Anfrage an die einzig erreichbare Basisstation FA-BS1 bis FA-BS4 senden. Dieses ist insbesondere dann der Fall, wenn nur eine Basisstation FA-BS1 vorhanden ist, oder die einer ersten Basisstation FA-BS1 benachbarten Basisstationen FA-BS2 bis FA-BS4 so definiert sind, dass sie den für sie festgelegten Hop-Radius nicht derart verändern können, dass das besagte Teilnehmer-Endgerät MN0 in deren Ad-hoc Netz aufgenommen werden kann.

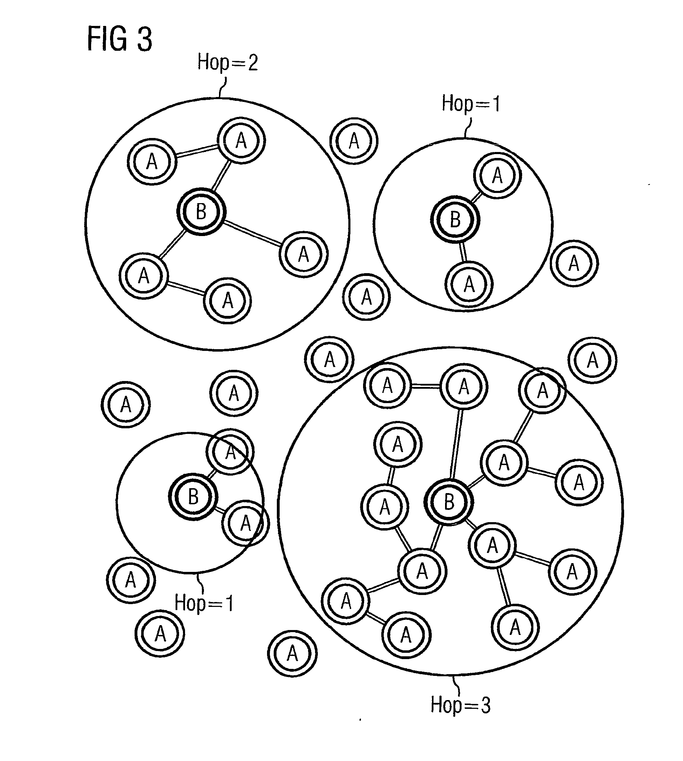

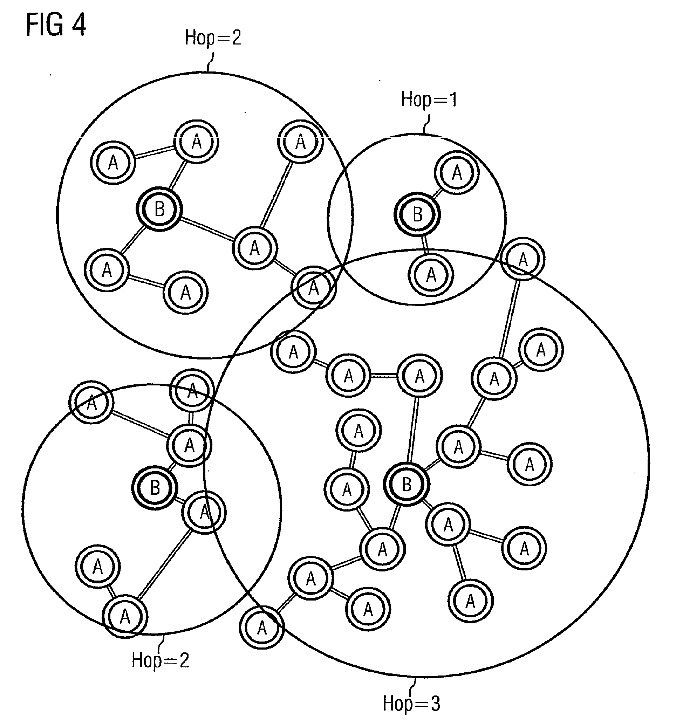

Wie bereits ausgeführt, wird bevorzugt vorgesehen, dass die Basisstationen FA-BS1 bis FA-BS4 die Informationen über einen vorläufig festgelegten Hop-Radius untereinander austauschen. Dieser Informationsaustausch kann als Broadcast/Multicast erfolgen und kann dafür die in Fig. 1 dargestellte, bestehende IP-basierte Infrastruktur verwenden. Auf Basis der empfangenen Informationen benachbarter Basisstationen FA-BS1 bis FA-BS4 kann jede der Basisstationen FA-BS1 bis FA-BS4 in einem oder mehreren iterativen Optimierungsschritten den vorläufigen Hop-Radius derart variieren, dass eine Versorgung einer möglichst großen Zahl von Ad-hoc Teilnehmer-Endgeräten MN0, MN1 möglich ist, gegebenenfalls unter Berücksichtigung von Minimalwerten für die Bandbreite jedes der Ad-hoc Netze. Diese Optimierung kann auch dynamisch erfolgen, beispielsweise für den Fall, wenn die Netzlast einer bestimmten Basisstation FA-BS1 ansteigt und der Hop-Radius dieser Basisstation FA-BS1 daher verringert werden muss. Hierbei kann im Rahmen des Optimierungsverfahrens ermittelt werden, ob und inwieweit andere Basisstationen FA-BS2 bis FA-BS4 ihren jeweiligen Hop-Radius erweitern können, um somit eine flächendeckende Datenversorgung der Ad-hoc Teilnehmer-Endgeräte MN0, MN1 zu ermöglichen, so dass jedes Ad-hoc Teilnehmer-Endgerät MN0, MN1 eine Datenverbindung zu einer Basisstation FA-BS1 bis FA-BS4 aufbauen kann. Dies wird noch anhand der Fig. 3 und 4 im Folgenden verdeutlicht.

Des weiteren kann innerhalb des Ad-hoc-Protokols eine Signalisierung zwischen Basisstationen FA-BS1 bis FA-BS4 und Ad-hoc Teilnehmer-Endgeräten MN0, MN1 sowie gegebenenfalls eine weitere Signalisierung innerhalb des IP-Protokolls zwischen verschiedenen, bevorzugt benachbarten Basisstationen FA-BS1 bis FA-BS4 vorgesehen werden, die es einer bestimmten Basisstationen FA-BS1 gestattet, ein zusätzliches Ad-hoc Teilnehmer-Endgerät MN1 abweisen bzw. einer anderen Basisstation FA-BS2 bis FA-BS4 zuweisen.

Wie bereits ausgefüht benötigt jedes Ad-hoc Teilnehmer-Endgerät MN0, MN1, das mit dem Internet kommunizieren will, eine Basisstation FA-BS1 bis FA-BS4 als Default-Gateway, damit die Routing-Anfragen an das Internet weitergeleitet werden. Hierzu wird ein IP-basiertes Mobilitätsprotokoll verwendet, dass die Anfragen und Antworten an die jeweilige Basisstation FA-BS1 bis FA-BS4 weiterleiten kann. Des weiteren wird durch die Verwendung eines solchen Mobilitätsprotokolls (z.B. Mobile IP/HMIP/FMIP) die globale Mobilität eines jeden Ad-hoc Teilnehmer-Endgerätes MN0, MN1 unterstützt. Somit ist ein Roaming zwischen disjunkten Ad-hoc Netzen verschiedener Basisstationen FA-BS1 bis FA-BS4 wie auch zwischen verschiedenen IP-Infrastrukturen jederzeit möglich, ohne dass bestehende IP-Verbindungen gestört werden.

Es sind also im Rahmen der Erfindung nach den vorliegenden Beispielen mehrere Basisstationen verteilt angebracht, wobei durch die Verwendung von multihop-fähigen Endgeräten und Ad-hoc Routing Protokollen die Reichweite (Coverage) der Basisstationen erhöht werden kann. Dabei expandiert in der Regel die Reichweite der Basisstation (Coverage Extension Radius) mit der Zahl der angebundenen Ad-hoc Knoten. Messungen zeigen, dass diese Expansion den Datendurchsatz negativ beeinflusst. Durch eine Begrenzung der Hop-Länge, d.h. durch Festlegung des Hop-Radius und/oder durch Begrenzung der zulässigen der Anzahl der Ad-hoc Knoten kann die Netzlast optimiert werden. Mit Hilfe der vorliegenden Erfindung kann seitens der Basisstationen die Datenrate und die Netzlast selbstständig derart geregelt werden, dass die tatsächlichen Netzlast eine vordefinierte maximale Netzlast nicht überschreitet. Somit kann die erforderliche Datenrate für jedes Ad-hoc Teilnehmer-Endgerät für Ad-hoc Datenverbindungen über die jeweilige Basisstation eingehalten werden.

Nach dem Stand der Technik ist bisher ein Ad-hoc Multihop-Protokoll so ausgelegt, dass eine maximal zulässige Hop-Länge bzw. ein festgelegter Hop-Radius bei der Anbindung von Ad-hoc Teilnehmer-Endgeräten an bestehende Ad-hoc Netze nicht vorgesehen wird. Nach dem Stand der Technik steht vielmehr die generelle Aufnahme aller Teilnehmer in ein bestehendes Ad-hoc Netz im Vordergrund, unabhängig von der Hop-Zahl. Außerdem ist eine autonome Verständigung der Basisstation untereinander über Begrenzungswerte sowie gegebenenfalls deren Optimierung in den Protokollen nach dem Stand der Technik derzeit nicht vorgesehen.

Im folgenden werden die oben beschriebenen Verfahren und Verfahrensschritte detailliert erläutert.
1. Verfahren zur Ermittlung der Hop-Länge und Festlegung des Hop-Radius:
   a) Definition einer optimalen Netzlast durch die Basisstation
   b) Bestimmung der tatsächlichen Netzlast durch die Basisstation
   c) Vergleich der optimalen Netzlast mit der maximal zulässigen Netzlast durch die Basisstation
   d) Festlegung eines Hop-Radius auf Basis des Ergebnisses aus Schritt c)
   e) Übermittlung von Informationen über den festgelegten Hop-Radius an benachbarte Basisstationen über das oben genannte Protokoll
   f) autonome Anpassung des Hop-Radius auf Basis von empfangenen Informationen über die Hop-Radien benachbarter Basisstationen durch die Basisstation
2. Verfahren zur Festlegung der maximalen Ad-hoc Teilnehmerzahl (Knotenzahl):
   a) Definition einer optimalen Knotenanzahl durch die Basisstation
   b) Bestimmung der tatsächlichen Knotenanzahl durch die Basisstation
   c) Vergleich der optimalen Knotenzahl mit der maximal zulässigen Knotenzahl durch die Basisstation
   d) Festlegung einer maximal zulässigen Knotenzahl
   e) Übermittlung von Informationen über die festgelegte Knotenzahl an benachbarte Basisstationen über das oben genannte Protokoll
   f) autonome Anpassung der Knotenzahl auf Basis von empfangenen Informationen über die Knotenzahl benachbarter Basisstationen durch die Basisstation
3. Verfahren zur kombinierten Festlegung der Hop-Länge und der Ad hoc Teilnehmerzahl (hybrides Verfahren):
   a) Festlegung der optimalen Netzlast, bestehend aus einem Optimum der Anzahl der Ad-hoc Knoten und des Hop-Radius durch die Basisstation
   b) Bestimmung der tatsächlichen Netzlast, bestehend aus der tatsächlichen Anzahl der Ad-hoc Knoten und dem tatsächlichen Hop-Radius durch die Basisstation
   c) Vergleich der tatsächlichen Netzlast mit der optimalen Netzlast durch die Basisstation
   d) Festlegung des Hop-Radius und der maximal zulässigen Knotenzahl
   e) Übermittlung von Informationen über den festgelegten Hop-Radius und die festgelegte Knotenzahl an benachbarte Basisstationen über das oben genannte Protokoll
   f) autonome Anpassung des Hop-Radius und der Knotenzahl auf Basis von empfangenen Informationen über den Hop-Radius und die Knotenzahl benachbarter Basisstationen durch die Basisstation

Eine mögliche Realisierung des Verfahrens zur Ermittlung des Hop-Radius nachfolgend beispielhaft beschrieben:
Es wird ein Algorithmus verwendet, der die jeweilige Last und den jeweiligen Zustand einer Basisstation in Verbindung mit dem angebundenen Ad-hoc Netz bewertet. Dieser Bewertung liegt die Ermittlung der Hop-Dichte und der Hop-Länge zu Grunde. Die Dichte-Berechnung ergibt sich aus der Anzahl der Ad-hoc Teilnehmer-Endgeräte geteilt durch den Hop-Radius. Es können auch zu unterschiedlichen Zeitpunkten ermittelte Einzelergebnisse aus der Berechung der Ad-hoc Dichte gemittelt werden und für einen Vergleich herangezogen werden. Steigt die Hop-Zahl, so ist auch mit einer zunehmenden
Netzdichte zu rechnen. Eine Zunahme der Netzdichte wird wiederum die Netzlast steigern. Dieses führt wiederum zur Minimierung der Datenrate aller Ad-hoc Teilnehmer-Endgeräte. Damit die Basisstation die ermittelte Datenrate für alle Ad-hoc Teilnehmer-Endgeräte einhalten kann, ist das Netz zu begrenzen. Dieses kann durch eine aktive Messung oder durch Vergleichswerte ermittelt werden, wodurch die optimale Netzdichte festgelegt werden kann. Die hierfür erforderlichen Werte sind der jeweiligen Basisstation bekannt.

Beim Aufbau eines Ad-hoc Netzes kann die Basisstation die aktuelle Netzdichte, die sich auf Basis der aktuell ermittelten Zahl von Ad-hoc Teilnehmer-Endgeräten ergibt, mit gespeicherten und/oder gemittelten Soll-Werten vergleichen und den Hop-Radius autonom festlegen. Durch den eigenständigen Vergleich seitens der Basisstation zwischen dem Soll-Wert der Netzdichte und dem Ist-Wert der Dichte der vorhandenen Ad-hoc Knoten kann die Basisstation den Hop-Radius ermitteln und zur Entscheidung, ob ein neues Ad-hoc Teilnehmer-Endgerät aufgenommen werden soll, verwenden. Ad-hoc Teilnehmer-Endgeräte mit einer Hop-Länge, die kleiner oder gleich dem Hop-Radius ist, können durch die Basisstation mit in das Ad-hoc Netz aufgenommen werden. Dadurch steigt jedoch die Netzlast. Ein Überschreiten eines Soll-Wertes oder Maximal-Wertes der Netzlast kann über den oben ausgeführten Vergleich der aktuellen Ad-hoc Teilnehmerzahl mit der festgelegten maximal zulässigen Anzahl der Ad-hoc Teilnehmer-Endgeräte und gegebenenfalls der Abweisung des neuen Teilnehmer-Endgerätes verhindert werden, oder durch Neuberechung der aktuellen Netzlast und gegebenenfalls Reduktion des Hop-Radius.

Das Kriterium für einen Ad-hoc Knoten, eine Route zu einem bestimmten Zielknoten aufzubauen, beruht nach dem Stand der Technik derzeit auf einer Hop Metrik, die darauf basiert, den kürzesten Pfad zu wählen und diesen als Kommunikationspfad zu verwenden. Folglich wird sich ein Ad-hoc Knoten in der Regel für eine Basisstation entscheiden, die den kürzesten Pfad anbietet. Dieses ist jedoch nach der Erfindung dann nicht zulässig, wenn die gewählte Pfadlänge den Hop-Radius des Ad-hoc Netzes der entsprechenden Basisstation überschreitet.

In Fig. 1 ist schematisch der Aufbau einer hierarchischen Kommunikations-Infrastruktur zur Realisierung der Erfindung dargestellt. In Fig. 1 sind beispielhaft vier Basisstationen FA-BS1 bis FA-BS4 dargestellt. Diese vier Basisstationen FA-BS1 bis FA-BS4 sind nach dem in Fig. 1 dargestellten IP-Protokoll als Foreign Agents ausgebildet, die zumindest regional über Regional Foreign Agents RFA miteinander verbunden sind. Bei IPv6, wie in Fig. 11 dargestellt, entspricht dieser Aufbau einer Struktur bestehend aus Mobility Anchor Points (MAP), die die lokale Registrierung der Ad-hoc Teilnehmer-Endgeräte durchführen. Des Weiteren zeigt die Fig. 1 zwei mobile Ad-hoc Knoten MN0, MN1, die sich zwischen den vier Basisstationen FA-BS1 bis FA-BS4 frei bewegen.

Die Fig. 2 zeigt eine Ad-hoc Netzstruktur aus vier Ad-hoc-Netzen, die jeweils aus Ad-hoc Teilnehmer-Endgeräten A sowie einer Basisstation B bestehen. Für die Hop-Länge zwischen den Basisstationen B und den Ad-hoc Teilnehmer-Endgeräten A ist kein Begrenzungswert definiert. Dies führt somit zu einem undefinierten Netzaufbau um jede der Basisstationen B und eine unsymmetrischen Netzlastverteilung auf bzw. um die einzelnen Basisstationen B, die der maximalen Datenübertragungskapazität der Basisstationen B in keinster Weise Rechnung trägt.

Fig. 3 zeigt eine Situation nach Fig. 2, wobei jedoch zur Realisierung der Ad-hoc Coverage für jede Basisstation B ein definierter Hop-Radius, d.h. eine maximal zulässige Hop-Anzahl festgelegt wurde (Hop=1,1,2,3). Durch die Ermittlung der Netzlast und der Berücksichtigung der Leistungsfähigkeit bzw. Übertragungskapazität der jeweiligen Basisstation (d.h. der theoretisch maximal möglichen Netzlast, wobei die Kapazität der Anbindung an das IP-Backbone hier mit maßgebend ist), kann ein individuell optimaler Hop-Radius durch jede Basisstation festgelegt werden. Fig. 3 zeigt aber, dass bei einer Festlegung lediglich eines von einer Basisstation B individuell festgelegten Hop-Radius die Situation auftreten kann, dass einzelne Ad-hoc Teilnehmer-Endgeräte nicht durch eine Basisstation B versorgt werden.

In Fig. 4 zeigt die Situation nach Fig. 3, nachdem der individuell festgelegte Hop-Radius der Basisstationen B durch eine Absprache zwischen den Basisstationen B regional und/oder global in einem oder mehreren iterativen Optimierungsschritten derart weiter optimiert wurde, dass alle Ad-hoc Teilnehmer-Endgeräte A versorgt werden können. Es ergeben sich damit Hop-Radien (Hop=1,2,2,3). Dabei ist auch eine dynamische Netzlastverteilung möglich, die es erlaubt, dass zwar möglichst jede Basisstation B nur soviel Ad-hoc Teilnehmer-Endgeräte A verwaltet, wie sie von ihrer eigenen Leistungsfähigkeit aufnehmen kann, trotzdem aber alle Teilnehmer-Endgeräte A versorgt werden. Damit kann
ein Ansteigen der Netzlast über die Kapazität jeder Basisstation B vermieden werden und trotzdem eine flächendeckende Versorgung gewährleistet werden.

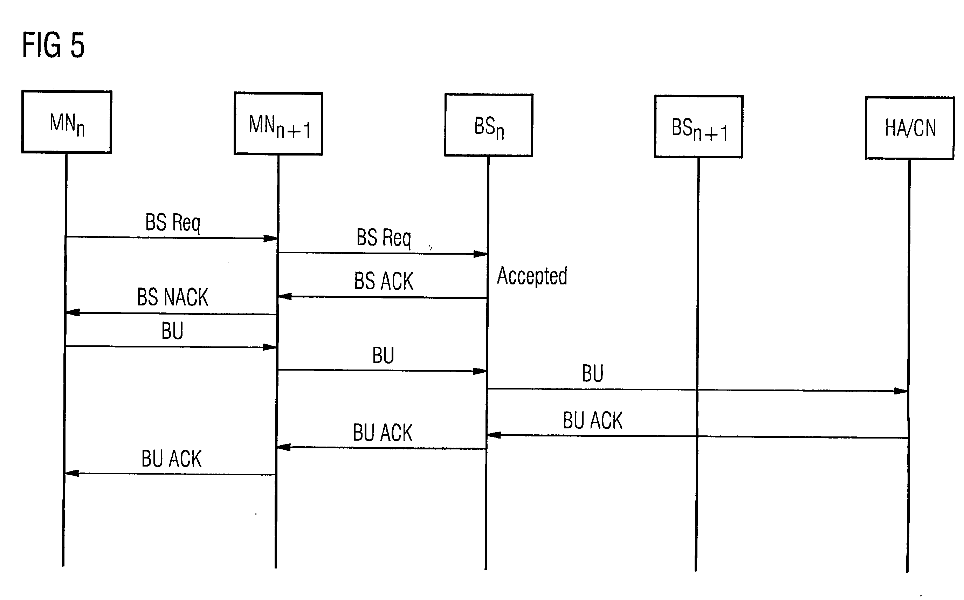

Fig. 5 zeigt den Sequenzverlauf des vorgeschlagenen Protokolls bei dem Versuch des Teilnehmer-Endgerätes MN(n), eine Verbindung zur Basisstation BS(n) aufzunehmen, um über diese Basisstation als default Gateway einen Zugang zum Internet zu bekommen. Hierzu sendet MN(n) über ein multihop-fähiges Endgerät MN(n+1), das bereits Teil des Ad-hoc-Netzes der Basisstation BS(n) ist, ein Base Station Request BS Req. BS(n) vergleicht darauf hin die Hop-Länge mit dem definierten Hop-Radius. Da dieser erfüllt ist, nimmt BS(n) das Teilnehmer-Endgerät MN(n) auf. Dieses startet daraufhin den Registrierungsprozess mit dem Home Agent (HA) bzw. mit dem Correspondent Node (CN) und sendet ein Binding Update BU. Dieses wird vom Home Agent bestätigt (BU ACK). Die Verbindung ist zu diesem Zeitpunkt vollständig aufgebaut. Teilnehmer-Endgerät MN(n) ist nun mit einer IP-basierten Infrastruktur (z.B. dem Internet) verbunden.

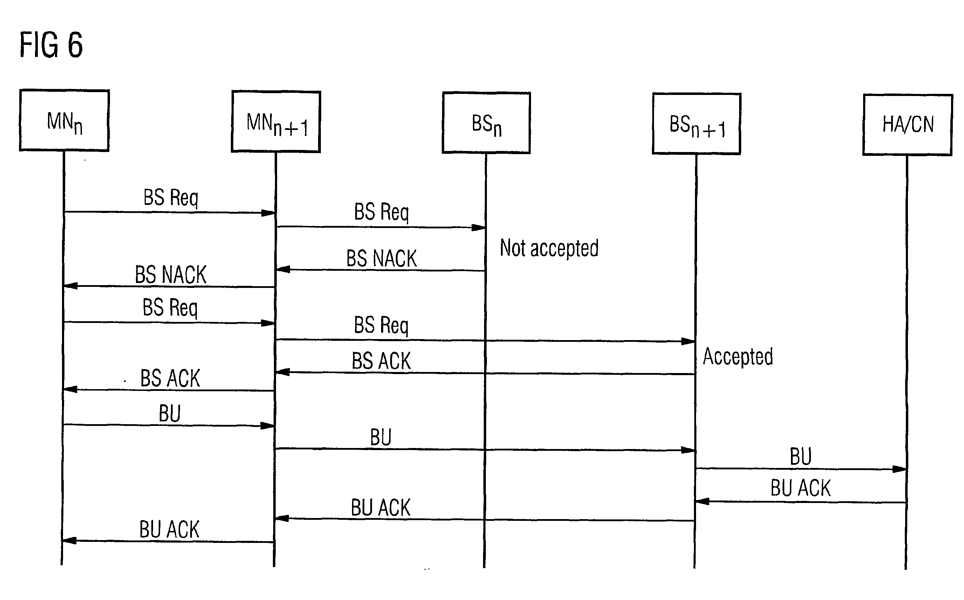

Fig. 6 zeigt analog zu Fig. 5 den Sequenzverlauf des vorgeschlagenen Protokolls bei dem Versuch des Teilnehmer-Endgerätes MN(n), eine Verbindung zur Basisstation BS(n) aufzunehmen, um über diese Basisstation als default Gateway einen Zugang zum Internet zu bekommen. Hierzu sendet MN(n) über ein multihop-fähiges Endgerät MN(n+1), das bereits Teil des Ad-hoc-Netzes der Basisstation BS(n) ist,ein Base Station Request BS Req. BS(n) vergleicht darauf hin die Hop-Länge mit dem definierten Hop-Radius. Als Ergebnis stellt die Basisstation BS(n) in diesem Fall jedoch fest, dass dieser nicht erfüllt ist. Daher sendet BS(n) ein negatives Acknowledgement BS NACK.

Teilnehmer-Endgerät MN(n) startet nun mit einem neuen Base Station Request BS Req. Daraufhin meldet sich eine weitere Basisstation BS(n+1). Diese könnte sich auch bereits beim ersten Request gemeldet haben. Das Teilnehmer-Endgerät MN (n) besitzt aber keine Kenntnis darüber, welche BS ihn aufnehmen kann. Daher wird beim zweiten Request die erste BS nicht antworten (eine Speicherung des Request kann bevorzugt vorgesehen werden). BS(n+1) ist nach den Vergleich der Hop-Länge mit dem Hop-Radius bereit den neuen Knoten MN(n) aufzunehmen, und sendet ein positives Acknowledgement BS ACK.

Hiernach startet Teilnehmer-Endgerät MN(n) mit dem Senden des Bindung Update (BU) an den Home Agent (HA). Die Verbindung ist vollständig aufgebaut.

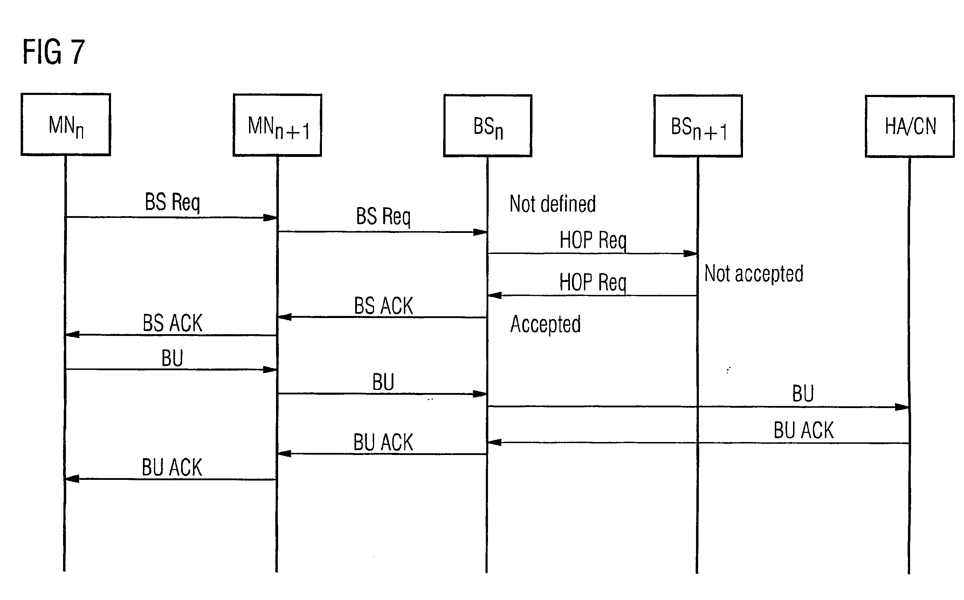

Fig. 7 zeigt den Sequenzverlauf bei dem Versuch des Teilnehmer-Endgerätes MN(n), sich an Basisstation BS(n) anzumelden. Hierzu sendet MN(n) wieder eine Anfrage über ein multihop-fähiges Endgerät MN(n+1), das bereits Teil des Ad-hoc-Netzes der Basisstation BS(n) ist. Die Basisstation BS(n) vergleicht die Hop-Länge mit einem definierten Hop-Radius. Der Vergleich führt zu dem Ergebnis, dass der Teilnehmer MN(n) abgewiesen werden müsste. Bevor die Basisstation BS(n) den neuen Teilnehmer MN(n) abweist, startet die Basisstation BS(n) eine Abfrage an benachbarte Basisstationen BS(n+1), um deren Hop-Radius festzustellen. Hierzu sendet BS(n) einen HOP Request (HOP Req). Die Antwort der benachbarten Basisstation BS(n+1) führt zu dem Ergebnis, dass BS(n) den neuen Teilnehmer MN(n) doch aufnehmen muss. Die Verbindung wird dann vollständig aufgebaut. Die Ursache hierfür kann sein, dass die andere BS(n+1) ihre Leistungsgrenze erreicht hat, was durch einen niedrigen Hop-Radius angezeigt werden kann. BS(n) besitzt den höchsten Hop-Radius und kann diesen erhöhen, damit das neue Teilnehmer-Endgerät MN(n) aufgenommen werden kann. Sollte die BS(n) den Hop-Radius nicht erhöhen können, da die Leistungsgrenze erreicht ist, wird das neue Teilnehmer-Endgerät MN(n) nicht aufgenommen. Dieser kann bzw. muss nun mittels eines Vertical Hanodff beispielsweise in ein übergeordnetes Netz, z.B. in ein zellulares Mobilfunknetz, wechseln.

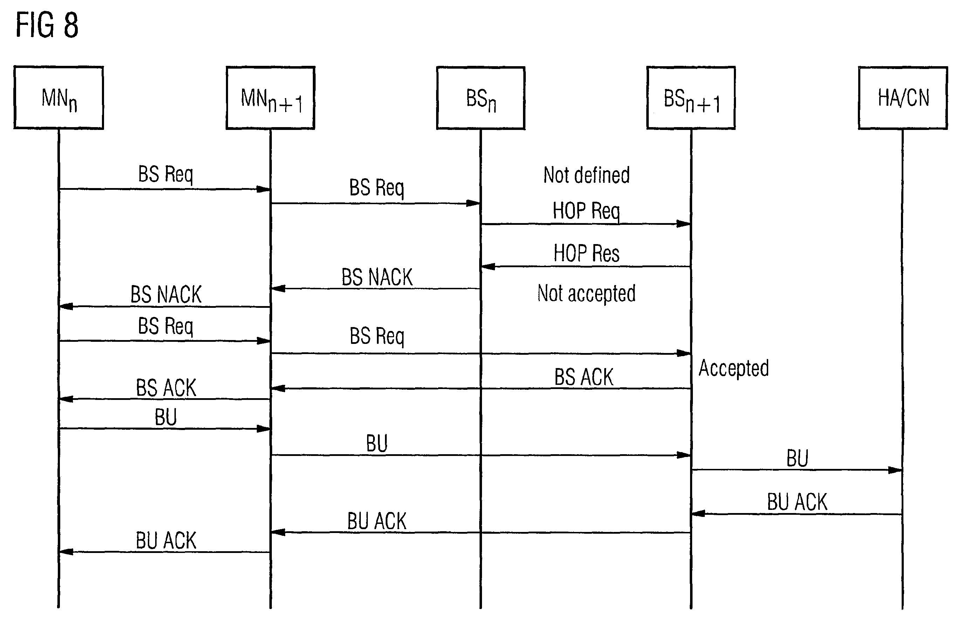

Fig. 8 zeigt den Sequenzverlauf bei dem Versuch des Teilnehmer-Endgerätes MN(n), sich über ein multihop-fähiges Endgerät MN(n+1) an der Basisstation BS(n) anzumelden. Die Basisstation BS(n) vergleicht die Hop-Länge mit einem festgelegten Hop-Radius. Der Vergleich führt zu dem Ergebnis, dass der Teilnehmer MN(n) abgewiesen werden müsste. Bevor die Basisstation BS(n) den neuen Teilnehmer MN(n) abweist, startet die Basisstation BS(n) eine Abfrage an die benachbarte Basisstation BS(n+1), um deren Hop-Radius festzustellen. Hierzu sendet BS(n) einen HOP Request HOP Req. Die Antwort der benachbarten Basisstation BS(n+1) führt zu dem Ergebnis, dass BS(n) den neuen Teilnehmer MN(n) nicht aufnehmen braucht. BS(s) sendet somit ein BS NACK. MN(n) sendet darauf hin einen BS Req, um eine andere Basisstation aufzuspüren. Es meldet sich BS(n+1), die einen höheren Hop-Radius besitzt. Diese Basisstation BS(n+1) vergleicht die Anfrage mit ihrem Hop-Radius und nimmt den neuen Teilnehmer MN(n) auf. Dieser sendet daraufhin das Binding Update (BU) an den Home Agent (HA). Die Verbindung ist vollständig aufgebaut.

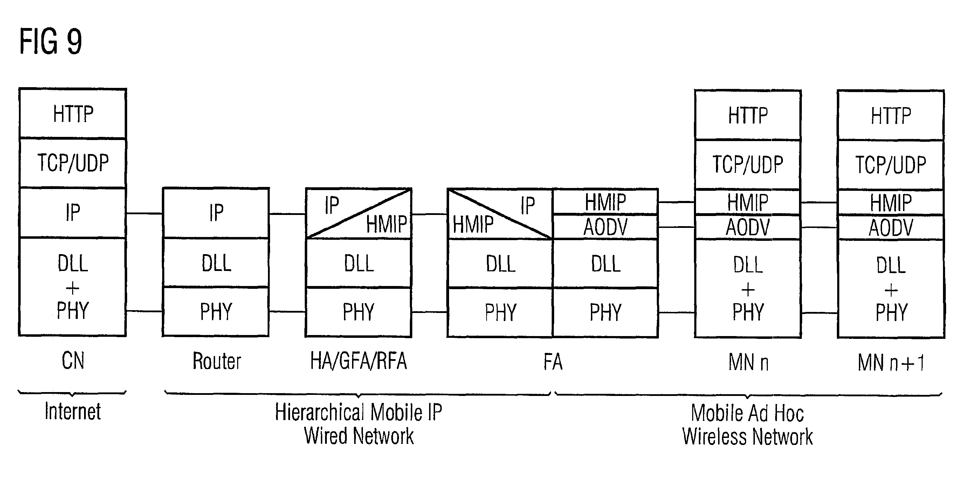

Fig. 9 zeigt den Protokollstack der Integration von Mobile IP und AODV (Ad hoc On-demand Distance Vector Routing Protocol) der beispielhaft für das hier beschriebene Protokoll verwendet worden ist. Es sind die folgenden Mobilitätsagenten dargestellt: Correspondent Node (CN), Home Agent (HA), Gateway Foreign Agent (GFA), Regional Foreign Agent (RFA) und Foreign Agent (FA). Ferner ist die Anbindung eines Ad-hoc Netzes, bestehend aus MN(n) und MN(n+1), dargestellt.

Das Ad-hoc Routing Protokoll (hier AODV) dient der Anbindung und Übertragung der IP-Routing Pakete. Der HMIP ProtokollStack dient der Anbindung der mobilen Teilnehmer-Endgeräte an das Internet, wenn diese zwischen den IP-Netzen wechseln. Hierzu müssen die Ad-hoc Teilnehmer-Endgeräte das Binding Update (BU) über die Basistation senden. Die Basistation ist hierbei der FA, der das Gateway zwischen dem Ad-hoc Netz und der IP-Infrastruktur darstellt.

Wird das Protokoll für HMIPv6 realisiert, so sind statt Gateway Foreign Agent (GFA) und Regional Foreign Agent (RFA) lediglich Mobility Anchor Points MAP gemäß Fig. 11 vorgesehen.

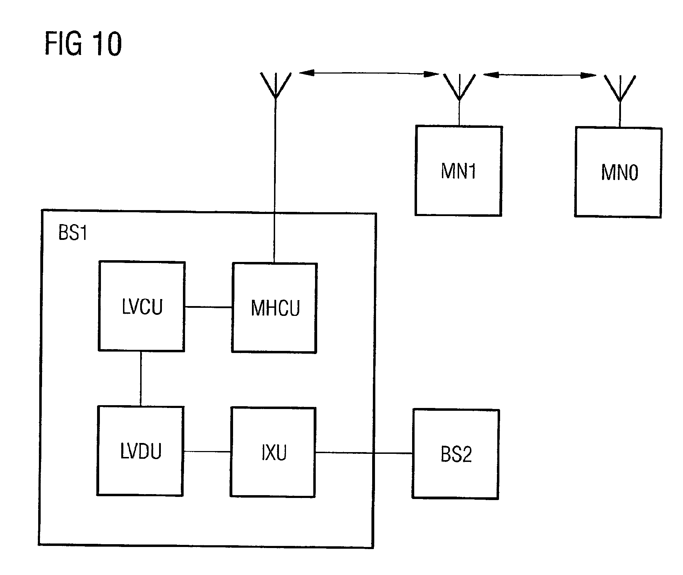

Fig. 10 zeigt schematisch die wesentlichen erfindungsgemäßen Komponenten einer Basisstation BS1 zum Aufbau von Kommunikationsverbindungen in einem Funk-Kommunikationssystems mit mindestens mehreren Basisstationen BS1, BS2 und Teilnehmer-Endgeräten MN0 MN1. Die Teilnehmer-Endgeräten MN0, MN1 sind als multihop-fähige Ad-hoc-Knoten ausgebildet. Das Teilnehmer-Endgerät MN0 versucht, über das Teilnehmer-Endgerät MN1 eine Ad-hoc Kommunkationsverbindung zu der Basisstation BS1 aufzubauen.

Die Basisstation BS1 weist eine Einrichtung Limit Value Definition Unit LVDU zur Festlegung des Hop-Radius für Multihop-Kommunikationsverbindungen auf. Diese Einrichtung LVDU ist datentechnisch verbunden mit einer Einrichtung Limit Value Comparison Unit LVCU zum Vergleich des festgelegten Hop-Radius mit aktuellen Werten für die Hop-Länge der aktuell fraglichen Kommunikationsverbindung. Diese Einrichtung LVCU ist wiederum datentechnisch verbunden mit einer Einrichtung Multihop Communication Unit MHCU zum Aufbau von weiteren Multihop-Kommunikationsverbindungen in Abhängigkeit vom Vergleichsergebnis. Schließlich ist zumindest die Einrichtung LVDU datentechnisch verbunden mit einer Einrichtung Information Exchange Unit IXU zum Austausch von Informationen über den Hop-Radius zwischen Basisstation BS1 und einer oder mehreren benachbarten Basisstationen BS2 des Funk-Kommunikationssystems.

Fig. 11 zeigt eine Struktur analog zu Fig. 1, die zur Realisierung von HMIPv6 im Rahmen der vorliegenden Erfindung dient. Dabei sind statt dem Gateway Foreign Agent GFA und den Regional Foreign Agents RFA lediglich Mobility Anchor Points MAP vorgesehen, die grundsätzlich in beliebigen Hierarchiestufen angeordnet sein können. Die Basisstationen BS1 bis BS4 dienen in diesem Fall als Access Router AR. Eine solche IP-Infrastruktur ist beliebig skalierbar, d.h. es können grundsätzlich beliebig viele MAPs in beliebiger hierarchischer Anordnung vorgesehen werden, um eine gewünschte Netzabdeckung bzw. eine gewünschte Zahl von Netzzugängen vorzusehen. Die Netzhierarchie kann in verschiedenen Zweigen der IP-Infrastruktur auch unterschiedlich ausgebildet sein, wie in Fig. 11 schematisch für den linken und den rechten Zweig der IP-Infrastruktur dargesetellt. Damit wird ersichtlich, dass für ein Teilnehmer-Endgerät MN1 ein Handover beispielsweise von der Basisstation BS3 zu der Basisstation BS4 in der Regel schneller abgewickelt werden kann, da nur lokale MAPs in die signaltechnische Abwicklung des Handovers involviert werden müssen und nicht eine zentrale Einrichtung wie ein RFA oder ein GFA.

## Patentansprüche

1. Verfahren zur Steuerung des Aufbaus von Kommunikationsverbindungen in einem Funk-Kommunikationssystem mit mindestens einer Basisstation (BS1,BS2,BS3,BS4) und Teilnehmer-Endgeräten (MNO, MN1), die zumindest teilweise als multihop-fähige Ad-hoc-Knoten ausgebildet sind,
wobei zumindest für einen Teil der Kommunikationsverbindungen seitens des Funk-Kommunikationssystems Begrenzungswerte für Multihop-Kommunikationsverbindungen festgelegt werden, aktuelle Werte für die Multihop-Kommunikationsverbindungen ermittelt werden, und
Multihop-Kommunikationsverbindungen zu Teilnehmer-Endgeräten (MNO, MN1) nur dann aufgebaut werden, soweit durch die ermittelten aktuellen Werte die festgelegten Begrenzungswerte nicht überschritten werden,
**dadurch gekennzeichnet,**
**dass** zwischen Basisstationen (BS1, BS2, BS3, BS4)des Funk-Kommunikationssystems ein Austausch von Informationen über die Begrenzungswerte erfolgt, die für die jeweiligen Basisstationen (BS1, BS2, BS3, BS4) festgelegt wurden.

2. Verfahren nach Anspruch 1,
**dadurch gekennzeichnet,**
**dass** für jede Basisstation (BS1, BS2, BS3, BS4) zumindest ein individueller Begrenzungswert festlegbar ist.

3. Verfahren nach Anspruch 1 oder 2,
**dadurch gekennzeichnet,**
**dass** eine Auswertung von Zellparametern durch eine Basisstation (BS1) des Funk-Kommunikationssystems erfolgt, und auf Basis des Ergebnisses der Auswertung Begrenzungswerte für die Kommunikationsverbindungen dieser Basisstation festgelegt werden.

4. Verfahren nach Anspruch 1,
**dadurch gekennzeichnet,**
**dass** der Austausch von Informationen zumindest teilweise auf einem Protokoll nach IPv6 basiert.

5. Verfahren nach Anspruch 4,
**dadurch gekennzeichnet,**
**dass** der Austausch von Informationen zumindest teilweise auf einem Protokoll nach HMIPv6 basiert.

6. Verfahren nach einem der Ansprüche 1 bis 5,
**dadurch gekennzeichnet,**
**dass** eine Anpassung der Begrenzungswerte einer Basisstation (BS1) auf Basis der festgelegten Begrenzungswerte benachbarter Basisstationen (BS2, BS3, BS4) erfolgt.

7. Verfahren nach einem der Ansprüche 1 bis 6,
**dadurch gekennzeichnet,**
**dass** die Begrenzungswerte auf Basis von Ad-hoc-Protokolldaten festgelegt werden.

8. Vorrichtung (BS1) zur Steuerung des Aufbaus von Kommunikationsverbindungen von/zu zumindest teilweise als multihop-fähige Ad-hoc-Knoten ausgebildeten Teilnehmer-Endgeräten (MNO, MN1),
aufweisend,
eine Einrichtung (LVDU) zur Festlegung von Begrenzungswerten für Multihop-Kommunikationsverbindungen zumindest für einen Teil der Kommunikationsverbindungen,
eine Einrichtung (LVCU) zum Vergleich der festgelegten Begrenzungswerte mit aktuellen Werten für die Multihop-Kommunikationsverbindungen,
eine Einrichtung (MHCU) zum Aufbau von weiteren Multihop-Kommunikationsverbindungen in Abhängigkeit vom Vergleichsergebnis, sowie
eine Einrichtung (IXU) zum Austausch von Informationen über die Begrenzungswerte mit weiteren Vorrichtungen (BS2) des Funk-Kommunikationssystems.

9. Vorrichtung nach Anspruch 8,
**dadurch gekennzeichnet,**
**dass** die Einrichtung (IXU) zum Austausch von Informationen zumindest teilweise zur Verarbeitung eines Protokolls nach IPv6 ausgelegt ist.

10. Vorrichtung nach Anspruch 9,
**dadurch gekennzeichnet,**
**dass** die Einrichtung (IXU) zum Austausch von Informationen zumindest teilweise zur Verarbeitung eines Protokolls nach HMIPv6 ausgelegt ist.

11. Computerprogramm zur Durchführung eines Verfahrens nach einem der Ansprüche 1 bis 7, insbesondere ausgebildet zum Zusammenwirken mit einer Vorrichtung nach einem der Ansprüche 8 bis 10,
**dadurch gekennzeichnet,**
**dass** das Computerprogramm aufweist:
eine erste Programmroutine, die zumindest für einen Teil der Kommunikationsverbindungen in einem Funk-Kommunikationssystems Begrenzungswerte für Multihop-Kommunikationsverbindungen berechnet und festlegt,
eine zweite Programmroutine zur Ermittlung von aktuellen Werten für die Multihop-Kommunikationsverbindungen und
eine dritte Programmroutine, die eine Vorrichtung zum Aufbau von Multihop-Kommunikationsverbindungen zu Teilnehmer-Endgeräten nur dann ansteuert, soweit durch die aktuellen Werte die festgelegten Begrenzungswerte nicht überschritten werden.

## Claims

1. Method for controlling the establishment of communication links in a radio communication system comprising at least one base station (BS1, BS2, BS3, BS4) and user terminals (MNO, MN1), at least some of which are implemented as multihop capable ad hoc nodes,
wherein, for at least some of the communication links, limit values for multihop communication links are defined on the part of the radio communication system,
current values for the multihop communication links are determined, and
multihop communication links to user terminals (MNO, MN1) are only set up insofar as the limit values set are not exceeded by the current values determined,
**characterised in that**
information concerning the limit values set for the respective base stations (BS1, BS2, BS3, BS4) is exchanged between base stations (BS1, BS2, BS3, BS4) of the radio communication system.

2. Method according to claim 1,
**characterised in that** at least one individual limit value can be set for each base station (BS1, BS2, BS3, BS4).

3. Method according to claim 1 or 2,
**characterised in that** cell parameters are analysed by a base station (BS1) of the radio communication system and, on the basis of the results of this analysis, limit values are set for the communication links of said base station.

4. Method according to claim 1,
**characterised in that** the exchange of information is based at least in part on an IPv6 protocol.

5. Method according to claim 4,
**characterised in that** the exchange of information is based at least in part on an HMIPv6 protocol.

6. Method according to one of claims 1 to 5,
**characterised in that** the limit values of a base station (BS1) are adjusted on the basis of the defined limit values of adjacent base stations (BS2, BS3, BS4).

7. Method according to one of claims 1 to 6,
**characterised in that** the limit values are defined on the basis of ad hoc protocol data.

8. Device (BS1) for controlling the establishment of communication links to/from user terminals (MNO, MN1) at least some of which are implemented as multihop capable ad hoc nodes,
having,
a unit (LVDU) for defining limit values for multihop communication links for at least some of the communication links,
a unit (LVCU) for comparing the defined limit values with current values for the multihop communication links, and
a unit (MHCU) for setting up further multihop communication links depending on the result of the comparison, and
a unit (IXU) for exchanging limit value information with other devices (BS2) of the radio communication system.

9. Device according to claim 8,
**characterised in that** the unit (IXU) for exchanging information is designed at least in part for processing an IPv6 protocol.

10. Device according to claim 9,
**characterised in that** the unit (IXU) for exchanging information is designed at least in part for processing an HMIPv6 protocol.

11. Computer program for carrying out a method according to one of claims 1 to 7, in particular designed to operate in conjunction with a device according to one of claims 8 to 10,
**characterised in that** the computer program has:
a first program routine which calculates and defines limit values for multihop communication links for at least some of the communication links in a radio communication system,
a second program routine for determining current values for the multihop communication links and
a third program routine which activates a device for setting up multihop communication links to user terminals only insofar as the defined limit values are not exceeded by the current values.

## Revendications

1. Procédé pour commander l'établissement de liaisons de communication dans un système de radiocommunication avec au moins une station de base (BS1, BS2, BS3, BS4) et des terminaux d'usagers (MNO, MN1) qui se présentent au moins en partie sous la forme de noeuds ad hoc aptes au multisaut,
au moins pour une partie des liaisons de communication, du côté du système de radiocommunication, des valeurs de limitation pour des liaisons de communication multisauts étant déterminées,
des valeurs actuelles pour les liaisons de communication multisauts étant établies et
des liaisons de communication multisauts vers des terminaux d'usagers (MNO, MN1) n'étant établies que dans la mesure où les valeurs de limitation déterminées ne sont pas dépassées par les valeurs actuelles établies,
**caractérisé en ce que** se produit, entre des stations de base (BS1, BS2, BS3, BS4) du système de radiocommunication, un échange d'informations sur les valeurs de limitation qui ont été déterminées pour les stations de base respectives (BS1, BS2, BS3, BS4).

2. Procédé selon la revendication 1, **caractérisé en ce qu'**au moins une valeur de limitation individuelle peut être déterminée pour chaque station de base (BS1, BS2, BS3, BS4).

3. Procédé selon la revendication 1 ou 2, **caractérisé en ce qu'**a lieu une évaluation de paramètres cellulaires par une station de base (BS1) du système de radiocommunication et des valeurs de limitation pour les liaisons de communication de cette station de base sont déterminées sur la base du résultat de l'évaluation.

4. Procédé selon la revendication 1, **caractérisé en ce que** l'échange d'informations se base au moins en partie sur un protocole selon IPv6.

5. Procédé selon la revendication 4, **caractérisé en ce que** l'échange d'informations se base au moins en partie sur un protocole selon HMIPv6.

6. Procédé selon l'une des revendications 1 à 5,
**caractérisé en ce qu'**il y a adaptation des valeurs de limitation d'une station de base (BS1) sur la base des valeurs de limitation déterminées de stations de base voisines (BS2, BS3, BS4).

7. Procédé selon l'une des revendications 1 à 6,
**caractérisé en ce que** les valeurs de limitation sont déterminées sur la base de données de protocole ad hoc.

8. Dispositif (BS1) pour commander l'établissement de liaisons de communication de/vers des terminaux d'usagers (MNO, MN1) qui se présentent au moins en partie sous la forme de noeuds ad hoc aptes au multisaut, comportant
un dispositif (LVDU) pour déterminer des valeurs de limitation pour des liaisons de communication multisauts au moins pour une partie des liaisons de communication,
un dispositif (LVCU) pour comparer les valeurs de limitation déterminées à des valeurs actuelles pour les liaisons de communication multisauts,
un dispositif (MHCU) pour établir d'autres liaisons de communication multisauts en fonction du résultat de la comparaison ainsi que
un dispositif (IXU) pour échanger des informations sur les valeurs de limitation avec d'autres dispositifs (BS2) du système de radiocommunication.

9. Dispositif selon la revendication 8, **caractérisé en ce que** le dispositif (IXU) servant à échanger des informations est conçu au moins en partie pour traiter un protocole selon IPv6.

10. Dispositif selon la revendication 9, **caractérisé en ce que** le dispositif (IXU) servant à échanger des informations est conçu au moins en partie pour traiter un protocole selon HMIPv6.

11. Programme informatique permettant d'exécuter un procédé selon l'une des revendications 1 à 7, en particulier réalisé pour coopérer avec un dispositif selon l'une des revendications 8 à 10, **caractérisé en ce que** le programme informatique comporte:
- une première routine de programme qui calcule et détermine des valeurs de limitation pour des liaisons de communication multisauts au moins pour une partie des liaisons de communication dans un système de radiocommunication,
- une deuxième routine de programme pour établir des valeurs actuelles pour les liaisons de communication multisauts et
- une troisième routine de programme qui n'active un dispositif servant à établir des liaisons de communication multisauts vers des terminaux d'usagers que dans la mesure où les valeurs de limitation déterminées ne sont pas dépassées par les valeurs actuelles.
